# EUROPEAN PATENT APPLICATION

(11) **EP 2 693 542 A1**
(43) Date of publication of application: **05.02.2014**
(21) Application number: 12764898.8
(22) Date of filing: 28.03.2012
(51) Int. Cl.: H01M 4/66, C25D 1/04, C25D 3/38

(54) **ELECTROLYTIC COPPER FOIL FOR SECONDARY BATTERY ANODE COLLECTOR AND METHOD FOR PRODUCING SAME**

(30) Priority: 30.03.2011 JP 2011076629
(71) Applicant: JX Nippon Mining & Metals Corporation, Tokyo 100-8164 (JP)
(72) Inventor: KOHIKI,Michiya, Hitachi-shi Ibaraki 317-0056 (JP); ISHII,Masafumi, Hitachi-shi Ibaraki 317-0056 (JP); MORIYAMA,Terumasa, Hitachi-shi Ibaraki 317-0056 (JP); MINAGAWA,Yoichi, Hitachi-shi Ibaraki 317-0056 (JP)
(74) Representative: Yeadon, Mark
(86) International application number: PCT/JP2012/058200
(87) International publication number: WO 2012/133564

(57) **Abstract**

The present invention provides an electrolytic copper foil which is excellent in the extension property and can endure the change in the expansion and contraction at the fine units while having high strength, and a method of producing the same. Specifically, the electrolytic copper foil for a negative electrode collector in a secondary battery, wherein in a nominal stress strain curve, a tensile strength is 45 to 70 kg/mm², and a value of the tensile strength is greater than a value of a breaking stress, and an extension rate is 5 % or more.

## Description

### TECHNICAL FIELD

The present invention relates to an electrolytic copper foil for a negative electrode collector in a secondary battery and a method of producing the same.

### BACKGROUND ART

In recent years, a lithium-ion secondary battery has been used in many cases, in association with the attainment of the high performance and multiple functions of a mobile device. Even in an automobile field, the development of the lithium-ion secondary battery for automobile use has been advanced. At present, the greatest subject in the lithium-ion secondary battery used therein lies in the attainment of a higher capacity, and various approaches have been tried. The lithium-ion secondary battery is configured such that a positive electrode and a negative electrode are provided in non-aqueous and aqueous electrolytic solutions, and positive electrode active substances are bound on a surface of a positive electrode collector, and negative electrode active substances are bound on a surface of a negative electrode collector.

In such approaches, when charging/discharging actions are repeated in the negative electrode in which the collector and the active substance layer are integrated into a single unit, the severe expansion and contraction of the active substance layer cause stress to be applied between the collector and the active substance layer. Thus, there is a case that the active substance layer is dropped. Alternatively, there is a case that a cyclic property is decreased when the collector is broken. Therefore, an approach of setting the tensile strength of the collector to a predetermined value or more or setting the extension of the collector to a predetermined value or more and consequently improving its physical characteristics has been reported (for example, refer to Patent Literatures 1 to 3).

### [Citation List]

### [Patent Literature]

Patent Literature 1: International Publication No. WO 01/029912
Patent Literature 2: Japanese Patent Application Laid-Open No. 2005-135856
Patent Literature 3: Japanese Patent Publication No.4632272

### SUMMARY OF INVENTION

### [Problem to be solved by the present invention]

However, the expansion and contraction of the active substances associated with a cycle are carried out at fine units. Thus, an evaluation is insufficient, only on the basis of the correlation between macro physical characteristics, such as tensile strength and extension, and cycle characteristics. Hence, there was a case that even if they were controlled, the property of the collector could not be sufficiently improved.

Accordingly, an object of the present invention is to provide an electrolytic copper foil for a negative electrode collector in a secondary battery, which is excellent in elongation and can withstand the change in the expansion and shrinkage at fine units while having a high strength, and a method of producing the same.

### [Means for solving the problem]

To solve the above-mentioned problems, the present inventors have produced an electrolytic copper foil which is excellent in local extension while having the high strength by setting conditions of electrolyzing conditions and an additive agent which is added into an electrolytic solution while producing the electrolytic copper foil. Further, in order to evaluate the characteristics of the obtained electrolytic copper foil, the present inventors have found out certain features in a tensile strength, an extension rate and a relation between tensile strength and breaking stress by comparing a nominal stress strain curve with a conventional electrolytic copper foil.

Thus, one aspect of the present invention that has completed based on the foregoing findings relates to an electrolytic copper foil for a negative electrode collector in the secondary battery, wherein in a nominal stress strain curve, a tensile strength is 45 to 70 kg/mm², a value of the tensile strength is greater than a value of the breaking stress and an extension rate is 5 % or more.

According to one embodiment of the electrolytic copper foil for the negative electrode collector in the secondary battery of the present invention, a ratio between the value of the breaking stress and the value of the tensile strength is 90 % or more and 99 % or less.

According to another embodiment of the electrolytic copper foil for the negative electrode collector in the secondary battery of the present invention, the tensile strength after execution of a heating operation for 30 minutes at 200°C is 85 % or more of a usual state tensile strength.

According to still another embodiment of the electrolytic copper foil for the negative electrode collector in the secondary battery of the present invention a thickness of the electrolytic copper foil is 6 to 20 µm.

Another aspect of the present invention relates to a method of producing an electrolytic copper foil for a negative electrode collector in a secondary battery, which includes producing the above electrolytic copper foil, wherein a copper sulfate electrolytic solution to which glue of 2 to 5 mass ppm is added as an additive agent is electrolyzed in a current density of 60 to 120 A/dm² at 60 to 65°C.

According to the present invention, it is possible to provide the electrolytic copper foil for the negative electrode collector in the secondary battery, which is excellent in the extension property and can endure the change in the expansion and contraction at the fine units while having the high strength, and a method of producing the same.

### [Brief description of the drawings]

Fig. 1 is a graph showing an example of a nominal stress strain curve (S-S curve) of an electrolytic copper foil for a negative electrode collector in a secondary battery according to an embodiment of the present invention; and
Fig. 2 is a graph showing an example of S-S curve (from a homepage of Japan Copper and Brass Association) of oxygen-free copper (O material).

### DESCRIPTION OF EMBODIMENTS

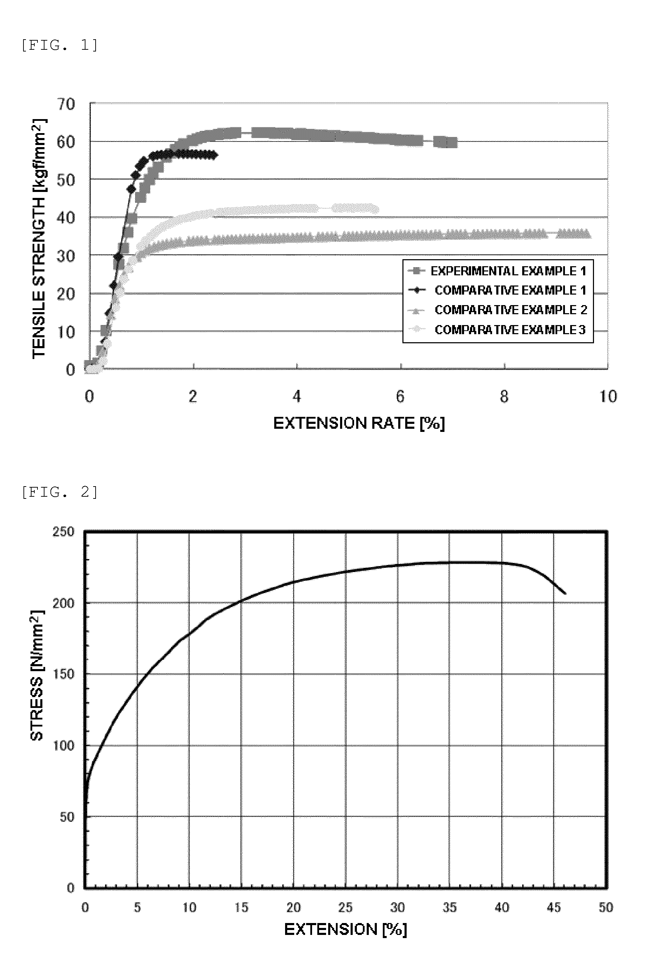

An electrolytic copper foil according to an embodiment of the present invention includes a certain feature when a nominal stress strain curve (S-S curve) is observed with regard to the characteristics of strength and extension. More specifically, as shown in an example of Fig. 1, a value of tensile strength which is the maximum stress in the nominal stress strain curve (stress strain diagrammatic view) indicates a value greater than a value of breaking stress which indicates a value of stress when the electrolytic copper foil is broken.

That is, with regard to a usual state tensile strength of the electrolytic copper foil according to the embodiment of the present invention, in the nominal stress strain curve, the tensile strength is 45 to 70 kg/mm², and the value of the tensile strength is greater than the value of the breaking stress, and the extension rate is 5 % or more. A ratio between the value of the breaking stress and the value of the tensile strength is 90 % or more and 100 % or less, preferably 92 to 99 %, and more preferably 95 to 99 %. The extension rate of the electrolytic copper foil becomes different depending on the thickness of the electrolytic copper foil. However, in the electrolytic copper foil having a thickness of about 10 µm, the extension rate is 5% or more, and specifically 5 to 10%. More specifically, the great extension rate of 5 to 8 % is obtained.

In the electrolytic copper foil according to the embodiment of the present invention, the tensile strength after the execution of a heating process for 30 minutes at 200°C is 85 % or more of the usual state tensile strength. Also in this case, the value of the tensile strength is greater than the value of the breaking stress, and the extension rate is 5 % or more. In the electrolytic copper foil after the execution of the heating process for 30 minutes at 200 °C, the ratio between the value of the breaking stress and the value of the tensile strength is 90 % or more and 100 % or less, preferably 92 to 99 %, and more preferably 95 to 99 %. The extension rate of the electrolytic copper foil after the execution of the heating process for 30 minutes at 200 °C becomes different depending on the thickness of the electrolytic copper foil. However, in the electrolytic copper foil having the thickness of about 10 µm, the extension rate is 5 % or more, and specifically 5 to 10 %. More specifically, the great extension rate of 5 to 8 % is obtained.

In the present invention, "tensile strength" refers to a value when a tensile strength test is carried out on the basis of IPC-TM-650, and "breaking stress" refers to a value when a test piece is broken. In the present invention, "the nominal stress strain curve (stress strain diagrammatic view)" to evaluate the characteristics of the electrolytic copper foil refers to a graph that represents the strain and the stress corresponding thereto. The nominal stress strain curve can be drawn by using a data that is obtained from a material test for measuring the stress and the strain simultaneously and continuously when the material is pulled at a constant speed while a constant load is applied to the material. "Extension rate" refers to a deformation quantity when the test piece is broken in the above test.

The nominal stress strain curve (stress strain diagrammatic view) is basic in understanding the characteristics of the material and can be drawn by using a data that is obtained from a material test which measures a stress and a strain simultaneously and continuously by applying a load to the material. Fig. 2 shows a typical diagrammatic nominal stress strain curve of oxygen-free copper. When the load is gradually applied to the material, the strain is also increased as the stress is increased. Then, after the arrival at the maximum stress, the stress is not increased even if the strain is further increased. On the contrary, a phenomenon that the stress is decreased is observed. This is because, as the material is extended, cross-sectional deformation (constriction) is generated in a part of the material, and the cross-sectional area of the test piece is made small. The above nominal stress strain curve is such that the diagrammatic view is drawn on the basis of a nominal stress and a nominal strain. The nominal stress is a value in which the load is divided by the cross-sectional area prior to the deformation. The nominal stress is based on the cross-sectional area prior to the deformation even if the deformation is progressed which leads to the change in the cross-sectional area. Also, the nominal strain is a value in which the deformation quantity is simply divided by a length prior to the deformation. The "true stress strain diagrammatic view" in which the foregoing cross-sectional area decrease is considered has a tendency that the stress is increased as the extension is increased. However, the true stress strain curve in the present invention has a tendency that the stress is constant. In this way, the material that has "the nominal stress strain curve" having the tendency in which after the arrival at the maximum stress, the stress is gradually decreased and finally broken is the material in which the part of the material is finally broken while the cross-sectional deformation (constriction) is generated.

On the other hand, the past conventional copper foil does not correspond to the foregoing tendency. As shown in Fig. 1, in the nominal stress strain curve, a differential value exhibits the maximum value two times. After that, the strain of the material is increased (or extended), which leads to the break or maximum stress value (tensile strength) while the stress is kept constant or gradually increased. This is because since the thickness of the copper foil is thin (for example, 20 µm or less), the influence of the cross-sectional deformation is little. For example, in the foil whose extension is little, the break is started from a portion that is likely to be broken prior to the cross-sectional deformation. On the other hand, the foil that exhibits the extension is considered such that, since the entire foil is uniformly extended, the cross-sectional deformation is little, and after the exhibition of a certain extension, the above foil is broken without any cross-sectional deformation from the portion which is likely to be broken.

On the contrary, according to the electrolytic copper foil pertaining to the embodiment of the present invention, irrespectively of the thin foil shape between 6 to 20 µm, this is the electrolytic copper foil having "the nominal stress strain curve" of a tendency in which after the exhibition of the maximum stress, the stress is gradually decreased and this is broken, differently from the tendency of the conventional electrolytic copper foil, as shown in the embodiment of Fig. 1. Thus, although having the high strength, this has the great extension. That is, this tendency indicates that the electrolytic copper foil pertaining to the present invention is the electrolytic copper foil in which irrespectively of the thin foil shape, after the exhibition of the maximum stress, the locally cross-sectional deformation (local extension) is induced and the great extension is generated, which leads to the break.

In this way, the electrolytic copper foil pertaining to the present invention becomes the electrolytic copper foil that has the high strength and the great extension and further has the characteristic of the local extension. The property of the electrolytic copper foil pertaining to the present invention, which is excellent in extension property although having this high strength, provides the effect that is advantageous for absorbing the great stress, which is applied to the foil in association with the large volume change in the active substance in the charging/discharging operation, in the case of the use as the electrolytic copper foil for the negative electrode collector in the secondary battery. In particular, the property excellent in local extension is considered to be the most excellent property from the standpoint of absorbing the variation in the volume expansion of the active substance.

This feature is considered to result from one factor in which in the electrolytic copper foil pertaining to the embodiment of the present invention, relatively large crystal particles and relatively small crystal particles are mixed at a suitable rate.

The particle shape in the organization of the electrolytic copper foil can be evaluated by using an electronic microscope and observing the cross-section of the electrolytic copper foil. That is, in the electrolytic copper foil according to the embodiment of the present invention, the crystal particles in the cross-section can be classified into microscopic particles each having an aspect ratio of less than 2.0 and columnar particles each having an aspect ratio of 2.0 or more. The total of the areas of the columnar particles occupies 10 to 55 %, and the remainder is occupied by the microscopic particles. In the case of the microscopic particles existing in the electrolytic copper foil, namely, in the case of the microscopic particles in which each aspect ratio is less than 2.0, its average particle diameter is desired to be 0.2 µm or less. "The aspect ratio" refers to a ratio between the maximum diameter and the minimum diameter of the particle, when the microscope is used to observe the cross-section of the electrolytic copper foil. The relatively large crystal particles contribute to the occurrence of the great extension, and the small crystal particles are responsible for the role of increasing the strength.

"The areas of the columnar particles" refers to the areas of the columnar particles which can be observed in the cross-section of the electrolytic copper foil and each of which has the aspect ratio of 2.0 or more. When the columnar particles are excessively small, namely, when the area rate of the columnar particles is less than 10 %, the extension rate is small, and there is a case that a warping quantity is further increased. On the contrary, when the area rate exceeds 55 %, the microscopic particles become reversely relatively small, and there is a case that the strength is reduced. Thus, when the cross-section is observed, the total of the areas of the columnar particles is 10 to 55 % of the entire cross-section.

The lower limit value of the average particle diameter is not especially limited. When this average particle diameter of the microscopic particles becomes large, the strength is reduced and a difference between the columnar particles and the microscopic particles becomes small. Thus, the anomalous nominal stress strain curve in which "after the maximum stress is exhibited, the stress is decreased" cannot be obtained. Thus, a fact in which the average particle diameter of the microscopic particles is 0.2 µm or less is a desirable situation. In the present invention, "the average particle diameter" represents an average value when a copper layer cross-section is observed by using EBSP and its observation view is evaluated by using a line segment method.

Since the electrolytic copper foil according to the embodiment of the present invention contains the above features, the tensile strength after the execution of the heating operation for 30 minutes at 200 °C is 85 % or more of the usual state tensile strength, preferably 90 % or more, and more preferably 95% or more. Consequently, the electrolytic copper foil that is excellent in press machining property and slit machining property can be obtained.

The electrolytic copper foil according to the embodiment of the present invention is small in surface roughness Rz, as compared with the conventional electrolytic copper foil. That is, its surface roughness Rz is 2.0 µm or less, further 1.8 µm or less, and furthermore 1.2 to 1.7 µm. The value of the "surface roughness Rz" refers to a result of the measurement in a roughness test based on JIS-B-0601. Consequently, the adhesive property to an anti-corrosive layer coated on the electrolytic copper foil is high, and a product handling property suitable for the electrolytic copper foil is obtained.

The thickness of the electrolytic copper foil is not limited to the followings. However, in the case of the use as the electrolytic copper foil for the negative electrode collector in the secondary battery, the thickness may be set to, for example, 20 µm or less, preferably 18 µm or less, and more preferably 15 µm or less. Consequently, the above properties can be sufficiently obtained. Also, the lower limit value of the thickness is not limited to the followings. However, it may be set to, for example, 6 µm or more.

When the electrolytic copper foil according to the embodiment of the present invention is produced, a sulfuric acid electrolytic solution to which glue of 2 to 5 mass ppm is added is used, and electrolyzed in a current density of 60 to 120 A/dm² at an electrolysis temperature of 60 to 65 °C. Specifically, the electrolytic copper foil can be produced by using an electrolytic copper foil producing apparatus where a rotating drum made of titanium or stainless steel in which a diameter is about 3000 mm and a width is about 2500 mm and electrodes placed at an inter-electrode distance of about 3 to 10 mm around the drum are arranged in an electrolytic bath. This example of the apparatus is one example, and the specification of the apparatus is not especially limited thereto.

In the electrolytic bath, a glue concentration of 2.0 to 10.0 mass ppm is added to the sulfuric acid electrolytic solution in which a copper concentration is 80 to 110 g/L and a sulfuric acid concentration is 70 to 110 g/L.

Then, a line speed is adjusted to 1.5 to 5.0 m/s, an electrolytic solution temperature is adjusted to 60 to 65 °C, and a current density is adjusted to 60 to 120 A/dm². Consequently, copper is precipitated onto the surface of the rotating drum, and the copper precipitated on the surface of the rotating drum is stripped, and the electrolytic copper foil is continuously produced. At the above step, the electrolyzing action in which the electrolytic solution temperature is set to 60 to 65 °C and the current density is set to 60 to 120 A/dm² is a condition preferable for getting the electrolytic copper foil that has the above characteristics. In particular, the adjustment of the electrolytic solution temperature is characteristic.

The anti-corrosive process may be preferably performed on the front or rear surface of the electrolytic copper foil and further performed on both surfaces. The anti-corrosive process is the coating process of single chromium oxide or the mixture coating process of chromium oxide and zinc/zinc oxide. The mixture coating process of the chromium oxide and the zinc/zinc oxide is the process that coats the anti-corrosive layer of a zinc - chromium group mixture, which is composed of the zinc or the zinc oxide and the chromium oxide, by using electrical plating, in a plating bath that includes zinc salt or the zinc oxide and the chromium oxide.

As the plating bath, typically, a mixed aqueous solution composed of: at least one kind of dichromate salt, such as K₂Cr₂O₇, Na₂Cr₂O₇ and the like, CrO₃ and the like; alkali hydroxide; and acid is used. Also, it is possible to use the mixed aqueous solution of the above aqueous solution and at least one kind of water-soluble zinc salts, for example, ZnO, ZnS04·7H₂O and the like.

A roughening process can be performed as necessary prior to the anti-corrosive process. As roughening particles, it is possible to form: plating of one kind of copper, cobalt and nickel; or alloy plating of two kinds or more of them. Usually, the roughening particles are formed by the alloy plating composed of the three kinds of copper, cobalt and nickel. Moreover, in the copper foil for the negative electrode collector in the secondary battery, in order to improve the heat resistance property and the weather resistance (corrosion resistance) property, an anti-corrosive processing layer composed of one kind or more that are selected from a cobalt - nickel alloy plating layer, a zinc - nickel alloy plating layer and a chromate layer, or a heat resistance layer and/or a silane coupling layer are desired to be formed on the roughening processing surface on both of the front and rear surfaces.

As necessary, a silane process for coating silane coupling agent may be performed on both of the front and rear surfaces of the anti-corrosive layer or the precipitation surface, as the main purpose of improving the adhesive force between the copper foil and the active substance. As the silane coupling agent used in this silane process, it may be possible to list olefin-system silane, epoxy-system silane, acryl-system silane, amino-system silane, and mercapto-system silane. However, they can be properly selected and used. As the coating method, it may be possible to use any of a spraying operation for spraying a silane coupling agent solution, a coating operation with a coater, an immersing operation, a pouring operation and the like.

### [Examples]

Examples of the present invention will be described below. However, the present invention is not intended to be limited to the following examples.

### (Experimental Example 1)

A rotating drum which was made of titanium and had a diameter of about 3133 mm and a width of 2476.5 mm and the electrodes which were placed at the inter-electrode distance of about 5 mm around the drum were arranged in the electrolytic bath. A copper concentration of 90 g/L, a sulfuric acid concentration of 80 g/L and a glue concentration of 3 mass ppm were poured into this electrolytic bath, and an electrolytic solution was prepared. Then, an electrolytic solution temperature was adjusted to 60 °C, and a current density was adjusted to 85 A/dm². Then, copper was precipitated onto the surface of the rotating drum, and the copper precipitated on the surface of the rotating drum was stripped. Consequently, the electrolytic copper foil which had a thickness of 10 µm and a surface roughness Ra of 1.6 µm was continuously produced.

On the electrolytic copper foil in the example 1, the tensile strength test was performed in accordance with the IPC-TM-650. Then, the tensile strength, the breaking stress and the extension rate were evaluated, and the nominal stress strain curve was drawn. The result is shown in Fig. 1.

In the experimental example 1, the tensile strength was 62.3 kg/mm², the breaking stress was 59.6 kg/mm², and the extension rate was 7 %. Thus, the value of the tensile strength became greater than the value of the breaking stress.

In the experimental example 1, as a result when the cross-section of the electrolytic copper foil was observed by using the EBSP, there were the microscopic particles each having the aspect ratio of less than 2.0 and the columnar particles each having the aspect ratio of 2.0 or more. In the entire cross-section, a total of the areas of the columnar particles was 31 %. The average particle diameter of the microscopic particles was 0.2 µm.

With regard to the electrolytic copper foil in the experimental example 1, the tensile strength test based on the IPC-TM-650 was performed on each of the electrolytic copper foil in the case of the usual state (23 °C) and the electrolytic copper foil after the execution of the heating operation for 30 minutes at 200 °C. Then, the tensile strength after the execution of the heating operation for 30 minutes at 200 °C was 97 % of the usual state tensile strength.

### (Comparative example 1)

Ingot that contained Sn 0.07 % of oxygen-free copper base was machined to a plate having a thickness of about 10 mm by a hot rolling operation. After that, a cold rolling operation and a re-crystallization annealing operation were repeated. Finally, the plate was finished to a thickness of 10 µm by the cold rolling operation. The final roll machining degree was performed in a range between 85 and 95 %.

On the rolled copper foil in the comparative example 1, the tensile strength test was performed similarly to the experimental example 1. Then, the tensile strength, the breaking stress and the extension rate were evaluated, and the nominal stress strain curve was drawn. The result is shown in Fig. 1.

### (Comparative example 2)

The rotating drum, which was made of titanium and had the diameter of about 3133 mm and the width of 2476.5 mm, and the electrodes, which were placed at the inter-electrode distance of about 5 mm around the drum, were arranged in the electrolytic bath. The copper concentration of 90 g/L, the sulfuric acid concentration of 80 g/L, an additive agent of bis (3-surfoproply) disulfide of 30 ppm, an amine compound of 30 pppm that had a particular skeleton that was obtained by additionally reacting a compound, which had one or more epoxy groups in one molecule and an amine compound, and chlorine ions of 60 ppm were poured into this electrolytic bath, and the electrolytic solution was prepared. Then, the electrolytic solution temperature was adjusted to 53 °C, and the current density was adjusted to 60 A/dm². Then, copper was precipitated onto the surface of the rotating drum, and the copper precipitated on the surface of the rotating drum was stripped. Consequently, the electrolytic copper foil having the thickness of 10 µm was continuously produced.

On the electrolytic copper foil in the comparative example 2, the tensile strength test was performed similarly to the experimental example 1. Then, the tensile strength, the breaking stress and the extension rate were evaluated, and the nominal stress strain curve was drawn. The result is shown in Fig. 1.

### (Comparative example 3)

The rotating drum, which was made of titanium and had the diameter of about 3133 mm and the width of 2476.5 mm, and the electrodes, which were placed at the inter-electrode distance of about 5 mm around the drum, were arranged in the electrolytic bath. The copper concentration of 90 g/L, the sulfuric acid concentration of 80 g/L, an additive agent glue of 3 ppm and the chlorine ions of 60 ppm were poured into this electrolytic bath, and the electrolytic solution was prepared. Then, the electrolytic solution temperature was adjusted to 53 °C, and the current density was adjusted to 106 A/dm². Then, copper was precipitated onto the surface of the rotating drum, and the copper precipitated on the surface of the rotating drum was stripped. Consequently, the electrolytic copper foil having the thickness of 10 µm was continuously produced.

On the electrolytic copper foil in the comparative example 3, the tensile strength test was performed similarly to the experimental example 1. Then, the tensile strength, the breaking stress and the extension rate were evaluated, and the nominal stress strain curve was drawn. The result is shown in Fig. 1.

## Claims

1. An electrolytic copper foil for a negative electrode collector in a secondary battery, wherein in a nominal stress strain curve, a tensile strength is 45 to 70 kg/mm², and a value of the tensile strength is greater than a value of a breaking stress, and an extension rate is 5 % or more.

2. The electrolytic copper foil for the negative electrode collector in the secondary battery of claim 1, wherein a ratio between a value of the breaking stress and a value of the tensile strength is 90 % or more and 99 % or less.

3. The electrolytic copper foil for the negative electrode collector in the secondary battery of claim 1 or 2, wherein the tensile strength after the execution of a heating operation for 30 minutes at 200 °C is 85 % or more of a usual state tensile strength.

4. The electrolytic copper foil for the negative electrode collector in the secondary battery of any one of claims 1-3, wherein a thickness of said electrolytic copper foil is 6 to 20 µm.

5. A method of producing the electrolytic copper foil for a negative electrode collector in a secondary battery of any of claims 1-4, the method comprising electrolyzing a copper sulfate electrolytic solution in which glue or 2 to 5 mass ppm is added as an additive agent in a current density of 60 to 120 A/dm² at 60 to 65 °C.
